# EUROPEAN PATENT APPLICATION

(11) **EP 4 752 061 A1**
(43) Date of publication of application: **03.06.2026**
(21) Application number: 24845501.6
(22) Date of filing: 17.07.2024
(51) Int. Cl.: B64D 27/31, B64C 11/38, B64D 27/10, B64D 33/08, H02K 7/108, H02K 7/116, H02K 7/14

(54) **AIRCRAFT PROPULSION SYSTEM**

(30) Priority: 26.07.2023 JP 2023121404
(71) Applicant: KAWASAKI JUKOGYO KABUSHIKI KAISHA, Kobe-shi, Hyogo 650-8670 (JP)
(72) Inventor: TERADA, Yuri, Kobe-shi, Hyogo 650-8670 (JP); TAKAMI, Hiroaki, Kobe-shi, Hyogo 650-8670 (JP); GOI, Tatsuhiko, Kobe-shi, Hyogo 650-8670 (JP)
(74) Representative: Dantz, Jan Henning
(86) International application number: PCT/JP2024/025661
(87) International publication number: WO 2025/023122

(57) **Abstract**

A propulsion system for an aircraft includes: electric motors; a propeller including blades whose pitch angles are changeable; a gear box that reduces speeds of rotations of the electric motors and transmits the rotations to the propeller; an actuator that changes the pitch angles of the blades; a pump that is driven by power transmitted from the gear box and supplies oil to the gear box; a heat exchanger that cools the oil by using at least one of a gas or a liquid as a cooling medium; and a circulation passage through which the oil circulates between the gear box and the heat exchanger.

## Description

### Technical Field

The present disclosure relates to a propulsion system for an aircraft.

### Background Art

PTL 1 discloses a propulsion system for an aircraft. This propulsion system is driven by an electric motor that is supplied with electric power from a battery.

### Citation List

### Patent Literature

PTL 1: U.S. Patent No. 11,420,761

### Summary of Invention

### Technical Problem

A propulsion system for an aircraft needs to include an accessory when an electric motor is utilized for propulsion. This type of propulsion system is desired to suppress an increase in weight while including the accessory.

An object of one aspect of the present disclosure is to provide a propulsion system for an aircraft which can suppress an increase in weight while including an accessory.

### Solution to Problem

A propulsion system for an aircraft according to one aspect of the present disclosure includes: electric motors; a propeller including blades whose pitch angles are changeable; a gear box that reduces speeds of rotations of the electric motors and transmits the rotations to the propeller; an actuator that changes the pitch angles of the blades; a pump that is driven by power transmitted from the gear box and supplies oil to the gear box; a heat exchanger that cools the oil by using at least one of a gas or a liquid as a cooling medium; and a circulation passage through which the oil circulates between the gear box and the heat exchanger.

### Advantageous Effects of Invention

One aspect of the present disclosure can provide a propulsion system for an aircraft which can suppress an increase in weight while including an accessory.

### Brief Description of Drawings

FIG. 1 is a perspective view showing an aircraft on which a propulsion system according to Embodiment 1 is mounted.
FIG. 2 is a block diagram showing the propulsion system for the aircraft shown in FIG. 1.
FIG. 3 is a perspective view showing the configurations of a gear box and its vicinity in the propulsion system shown in FIG. 2.
FIG. 4 is a front view showing the configurations of the gear box and its vicinity in the propulsion system shown in FIG. 2.
FIG. 5 is a rear view showing the configurations of the gear box and its vicinity in the propulsion system shown in FIG. 2.
FIG. 6 is a side view showing the configurations of the gear box and its vicinity in the propulsion system shown in FIG. 2.
FIG. 7 is a side sectional view showing the configurations of the gear box and its vicinity in the propulsion system shown in FIG. 2.
FIG. 8 is a block diagram showing the propulsion system for the aircraft according to Embodiment 2.
FIG. 9 is a block diagram showing the propulsion system for the aircraft according to Embodiment 3.
FIG. 10 is a block diagram showing the propulsion system for the aircraft according to Embodiment 4.
FIG. 11 is a block diagram showing the propulsion system for the aircraft according to Embodiment 5.

### Description of Embodiments

Hereinafter, embodiments will be described with reference to the drawings. In the following description, a "front side" denotes a side where a propeller of a propulsion system is located in an axial direction of a rotating shaft of the propeller, and a "rear side" denotes an opposite side to the side where the propeller is located in the axial direction of the rotating shaft of the propeller. Moreover, a direction orthogonal to the axial direction of the rotating shaft of the propeller is referred to as a "radial direction," and the radial direction is denoted by a reference sign R. A "lateral side" denotes an outside of the propulsion system in the radial direction.

### Embodiment 1

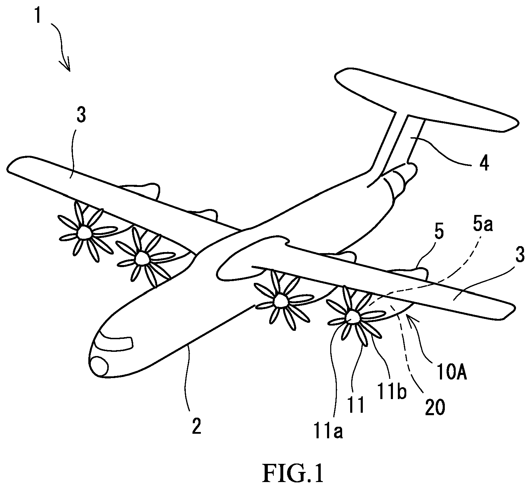

FIG. 1 is a perspective view showing an aircraft 1 on which a propulsion system 10A according to Embodiment 1 is mounted. The aircraft 1 is a propeller aircraft including propellers 11. The aircraft 1 includes an airframe 2, a pair of left and right main wings 3, and an empennage 4. The airframe 2 extends in a front-rear direction. The left and right main wings 3 are attached in the vicinity of a middle portion of the airframe 2 in the front-rear direction. The empennage 4 is attached to a rear end portion of the airframe 2. The left and right main wings 3 extend leftward and rightward, respectively. Two nacelles 5 are attached to a lower portion of each main wing 3. The two nacelles 5 are located so as to be spaced apart from each other in a left-right direction. The propulsion system 10A that generates propulsive force for the aircraft 1 is located in each nacelle 5.

The propulsion system 10A includes the propeller 11 and a drive 20 that drives the propeller 11. The propeller 11 includes a hub 11a and blades 11b supported by the hub 11a. The blades 11b extend in the radial direction R from the hub 11a. The propeller 11 is located in front of the nacelle 5. The drive 20 is located behind the propeller 11. The drive 20 is located in the nacelle 5.

### Entire Configuration of Propulsion System

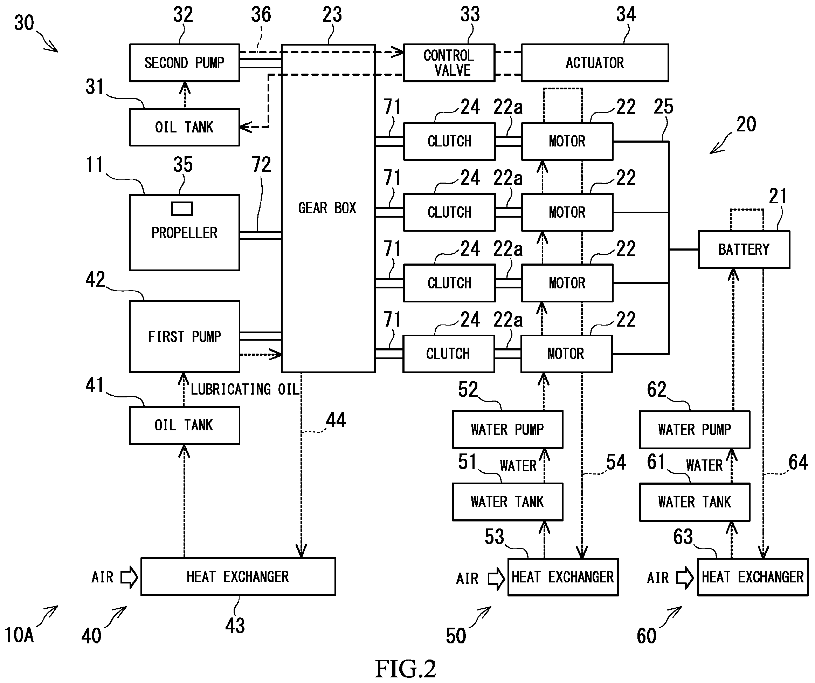

FIG. 2 is a block diagram showing the propulsion system 10A for the aircraft 1 shown in FIG. 1. The drive 20 includes electric motors 22 and a gear box 23. The electric motors 22 are driven by electric power supplied from a battery 21 through an electric power line 25. The number of electric motors 22 is, for example, four, but is not limited to this. The battery 21 is, for example, a fuel cell or a storage battery. The fuel cell generates electric power by an electrochemical reaction between hydrogen as fuel and oxygen.

The gear box 23 is located in a power transmitting path extending between the electric motors 22 and the propeller 11. The gear box 23 constitutes a reduction gear. The gear box 23 reduces the speeds of the rotations of the electric motors 22 and transmits the rotations to the propeller 11. Clutches 24 are interposed between the gear box 23 and the electric motors 22. The gear box 23 includes input shafts 71 corresponding to the respective electric motors 22, and the input shafts 71 are connected to the respective clutches 24. Moreover, output shafts 22a of the electric motors 22 are connected to the respective clutches 24.

Each clutch 24 is, for example, a sprag one-way clutch but may be a different type of clutch. The clutch 24 allows the transmission of torque from the output shaft 22a of the electric motor 22 to the input shaft 71 of the gear box 23 but inhibits the transmission of torque from the input shaft 71 of the gear box 23 to the output shaft 22a of the electric motor 22. Therefore, when one of the electric motors 22 is in a stop state, the power from the gear box 23 is prevented from being transmitted to the electric motor 22 that is in the stop state. Examples of a case where one of the electric motors 22 is in the stop state include a case where power supply to at least one of the electric motors 22 is turned off in order to reduce propeller output and a case where any of the electric motors 22 malfunctions.

The gear box 23 includes an output shaft 72. The propeller 11 is connected to the output shaft 72. The hub 11a may be directly connected to a front end portion of the output shaft 72 or may be indirectly connected to the front end portion of the output shaft 72 through another shaft. A detailed configuration of the gear box 23 will be described later.

### Lubricator

The propulsion system 10A includes a lubricator 40. The lubricator 40 supplies lubricating oil to gears included in the gear box 23. The lubricator 40 includes an oil tank 41, a first pump 42, a heat exchanger 43, and a circulation passage 44. The oil tank 41 stores oil. The oil stored in the oil tank 41 is, for example, the lubricating oil to be supplied to the gear box 23.

For example, the first pump 42 supplies the lubricating oil, stored in the oil tank 41, to the gear box 23. The first pump 42 is driven by the power transmitted from the gear box 23. The first pump 42 supplies the oil to the gear box 23 at pressure different from that of the oil supplied to an actuator 34 by a below-described second pump 32. For example, the first pump 42 supplies the oil to the gear box 23 at pressure lower than that of the oil supplied to the actuator 34 by the second pump 32. The second pump 32 and the first pump 42 may be respectively referred to as a high-pressure pump and a low-pressure pump. Moreover, the lubricator 40 is, for example, of a dry sump type, and the oil tank 41 and the first pump 42 are located outside the gear box 23.

The heat exchanger 43 cools the oil flowing through the circulation passage 44. The heat exchanger 43 is, for example, of an air-cooled type. An air inlet 5a is located on the nacelle 5 of the aircraft 1 (see FIG. 1). The heat exchanger 43 cools the oil by using, as the cooling medium, air flowing therein through the air inlet 5a. The air inlet 5a is located on, for example, an outer wall of the nacelle 5 but may be located on a center portion of the propeller 11 or a peripheral portion of the propeller 11.

The oil tank 41, the first pump 42, the heat exchanger 43, and the gear box 23 are located at the circulation passage 44. The oil circulates between the gear box 23 and the heat exchanger 43 through the circulation passage 44. To be specific, when the first pump 42 drives, the lubricating oil stored in the oil tank 41 is supplied to the gear box 23. The lubricating oil is heated by passing through the gear box 23. After flowing out of the gear box 23, the lubricating oil is sent to the heat exchanger 43 to be cooled, and then returns to the oil tank 41.

### Pitch Changer

The propulsion system 10A includes a pitch changer 30 that changes pitches of the blades 11b. To be specific, the propeller 11 is a variable-pitch propeller including the blades 11b whose pitch angles are changeable.

The pitch changer 30 includes an oil tank 31, the second pump 32, a control valve 33, the actuator 34, and a pitch changing structure 35. In the present embodiment, the actuator 34 is a hydraulic actuator, but is not limited to this. The oil tank 31 stores oil. The oil stored in the oil tank 31 is, for example, operating oil used as a power-transmitting medium in the actuator 34. The pitch changer 30 may include at least one of the actuator 34 or the control valve 33.

The second pump 32 is located at a circulation passage 36 extending between the oil tank 31 and the actuator 34. For example, the second pump 32 supplies the operating oil, stored in the oil tank 31, to the actuator 34 through the circulation passage 36. The second pump 32 is driven by the power transmitted from the gear box 23. Moreover, the oil tank 31 and the second pump 32 are located outside the gear box 23.

The control valve 33 controls the operation of the actuator 34. The control valve 33 is located at an oil passage extending between a discharge port of the second pump 32 and the actuator 34. For example, based on a control command received from a controller located in the airframe 2, the control valve 33 changes an opening degree and adjusts the pressure of the operating oil to be supplied to the actuator 34.

The actuator 34 changes the pitch angles of the blades 11b. The actuator 34 is, for example, a hydraulic cylinder. When the actuator 34 is the hydraulic cylinder, the actuator 34 includes: at least one hydraulic chamber; a piston that is displaced along a rotation axis of the propeller 11 by the pressure of the hydraulic chamber; and a rod that is displaced together with the piston. The movement of the rod is transmitted to the pitch changing structure 35 in the hub 11a of the propeller 11 through a rod-shaped body extending inside the gear box 23 along the rotation axis of the propeller 11. For example, the control valve 33 is a directional control valve that can switch an operating oil supply destination between a rod-side hydraulic chamber and a head-side hydraulic chamber of the actuator 34 based on a control command received from the controller located in the airframe 2.

The pitch changing structure 35 is located in the hub 11a of the propeller 11 and converts the movement of the rod of the actuator 34 into a rotational movement around a longitudinal axis of the blade 11b. The pitch changing structure 35 may be located outside the hub 11a of the propeller 11. The actuator 34 drives the blades 11b through the pitch changing structure 35 such that the pitches correspond to the pressure of the operating oil supplied.

### Cooler

The propulsion system 10A includes coolers 50 and 60.

The cooler 50 cools the electric motors 22. The cooler 50 includes a water tank 51, a water pump 52, a heat exchanger 53, and a circulation passage 54. The water tank 51 stores water used as cooling water. The cooler 50 can use a liquid other than water. The water tank 51 can store a liquid other than water.

The water pump 52 supplies the water, stored in the water tank 51, to the electric motors 22. The water pump 52 may be of an electric type or a mechanical type.

The heat exchanger 53 cools the water flowing through the circulation passage 54. The heat exchanger 53 is, for example, of an air-cooled type. The air inlet 5a is located on the nacelle 5 of the aircraft 1. The air inlet 5a is located on, for example, the outer wall of the nacelle 5 but may be located on the center portion of the propeller 11 or the peripheral portion of the propeller 11. The heat exchanger 53 cools the water, flowing into the heat exchanger 53, by using the air flowing therein through the air inlet 5a as the cooling medium.

The water tank 51, the water pump 52, the heat exchanger 53, and the electric motors 22 are located at the circulation passage 54. The cooling water circulates between the electric motors 22 and the heat exchanger 53 through the circulation passage 54. To be specific, when the water pump 52 drives, the water stored in the water tank 51 is supplied to the electric motors 22. In FIG. 2, the circulation passage 54 includes passages which are connected in series and through which the water is supplied to the electric motors 22. However, the circulation passage 54 is not limited to this. For example, the circulation passage 54 may include branch passages which extend from a water passage extending from the water pump 52, are connected to the respective electric motors 22, and are connected in parallel. The cooling water is heated by passing through the electric motors 22. After passing through the electric motors 22, the cooling water is sent to the heat exchanger 53 to be cooled, and then returns to the water tank 51.

The cooler 60 cools the battery 21. The cooler 60 includes a water tank 61, a water pump 62, a heat exchanger 63, and a circulation passage 64. The water tank 61 stores water used as the cooling water.

The water pump 62 supplies the water, stored in the water tank 61, to the battery 21. For example, the water pump 62 may be of an electric type or a mechanical type.

The heat exchanger 63 cools the water flowing through the circulation passage 64. The heat exchanger 63 is, for example, of an air-cooled type. The air inlet 5a is located on the nacelle 5 of the aircraft 1. The air inlet 5a is located on, for example, the outer wall of the nacelle 5 but may be located on the center portion of the propeller 11 or the peripheral portion of the propeller 11. The heat exchanger 63 cools the water, flowing into the heat exchanger 63, by using the air flowing therein through the air inlet 5a as the cooling medium.

The water tank 61, the water pump 62, the heat exchanger 63, and the battery 21 are located at the circulation passage 64. The cooling water circulates between the battery 21 and the heat exchanger 63 through the circulation passage 64. To be specific, when the water pump 62 drives, the water stored in the water tank 61 is supplied to the battery 21. The cooling water is heated by passing through the battery 21. After passing through the battery 21, the cooling water is sent to the heat exchanger 63 to be cooled, and then returns to the water tank 61.

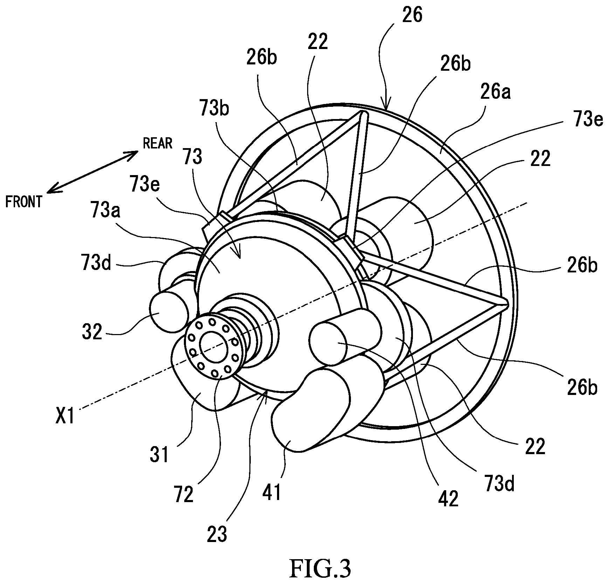

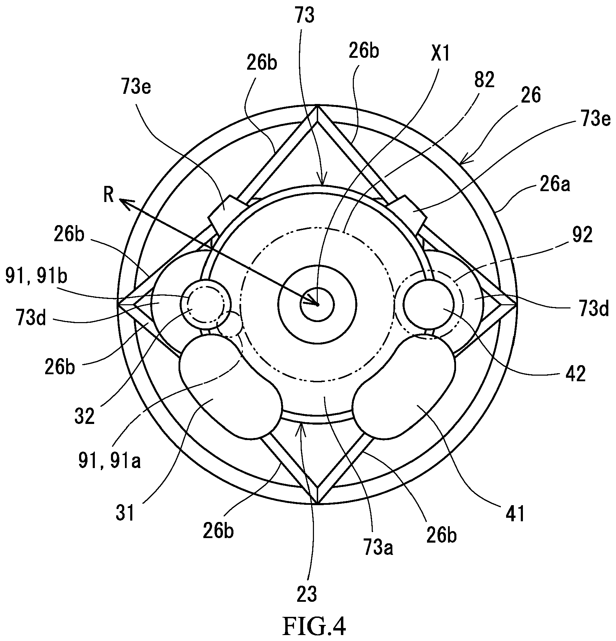

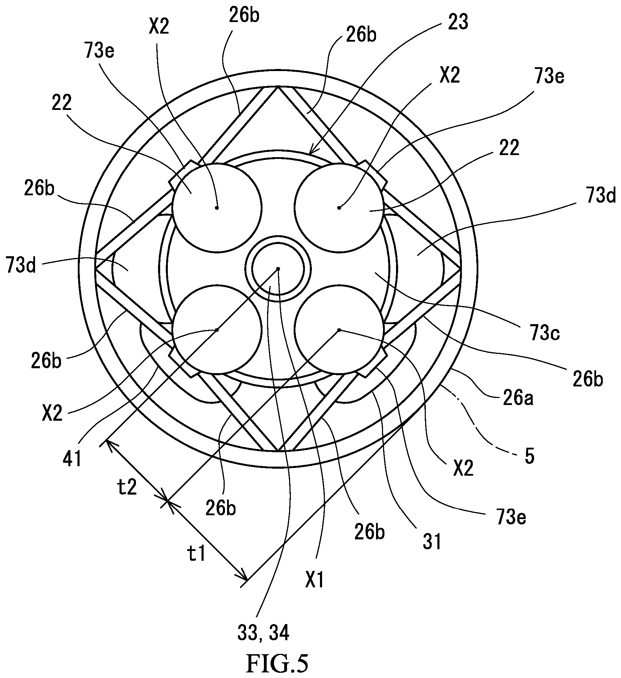

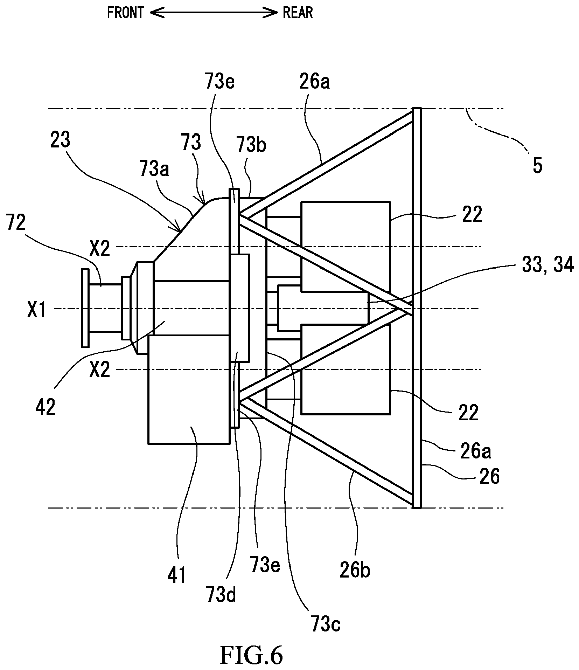

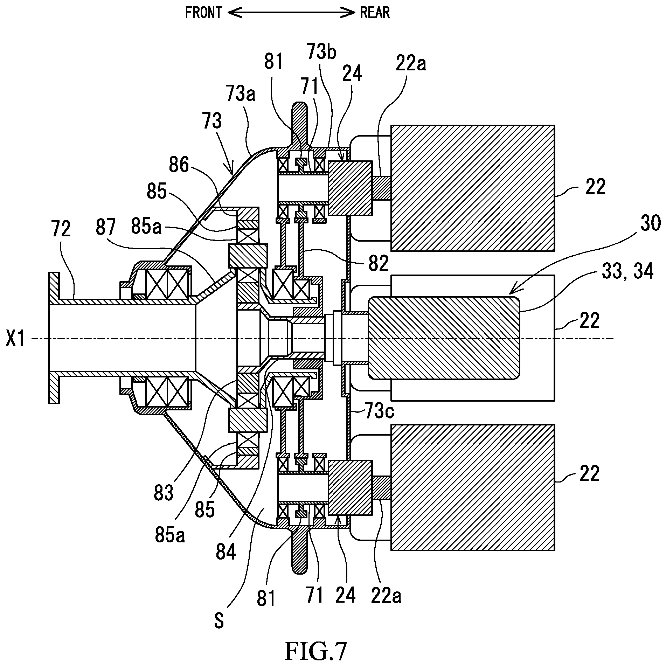

Next, details of the gear box 23 will be described with reference to FIGS. 3 to 7. FIG. 3 is a perspective view showing the configurations of the gear box 23 and its vicinity in the propulsion system 10A shown in FIG. 2. FIG. 4 is a front view showing the configurations of the gear box 23 and its vicinity in the propulsion system 10A shown in FIG. 2. FIG. 5 is a rear view showing the configurations of the gear box 23 and its vicinity in the propulsion system 10A shown in FIG. 2. FIG. 6 is a side view showing the configurations of the gear box 23 and its vicinity in the propulsion system 10A shown in FIG. 2. FIG. 7 is a side sectional view showing the configurations of the gear box 23 and its vicinity in the propulsion system 10A shown in FIG. 2.

The gear box 23 includes a housing 73 accommodating gears. As shown in FIG. 3, the housing 73 has a substantially truncated cone shape that decreases in diameter as it extends forward along a rotation axis X1 of the propeller 11. For example, the housing 73 includes a first tubular portion 73a, a second tubular portion 73b, a back surface portion 73c, and two semi-columnar portions 73d. The first tubular portion 73a, the second tubular portion 73b, the back surface portion 73c, and the two semi-columnar portions 73d define a gear accommodating space S.

As shown in FIG. 7, the first tubular portion 73a is open in the front-rear direction. The first tubular portion 73a has a substantially hollow truncated cone shape whose center line coincides with the rotation axis X1 of the propeller 11. The output shaft 72 of the gear box 23 projects forward so as to pass through a front opening of the first tubular portion 73a. The first tubular portion 73a increases in diameter as it extends rearward.

The second tubular portion 73b is open in the front-rear direction. The second tubular portion 73b has a substantially cylindrical shape whose center line coincides with the rotation axis X1 of the propeller 11. A front opening edge of the second tubular portion 73b is connected to a rear opening edge of the first tubular portion 73a.

The back surface portion 73c is connected to a rear opening edge of the second tubular portion 73b so as to close a rear opening of the second tubular portion 73b. The back surface portion 73c has a disc shape. The back surface portion 73c includes openings.

Moreover, as shown in FIG. 4, the two semi-columnar portions 73d are connected to the second tubular portion 73b. Each semi-columnar portion 73d has a substantially semi-columnar shape whose center line is parallel to the rotation axis X1 of the propeller 11. Each semi-columnar portions 73d has a hollow shape that is open toward the second tubular portion 73b. One of the two semi-columnar portions 73d defines a space that accommodates at least part of a pump drive gear 91 described below, and the other defines a space that accommodates at least part of a pump drive gear 92 described below. The spaces covered by the semi-columnar portions 73d communicate with an internal space of the second tubular portion 73b. The second tubular portion 73b includes two opening portions at lateral sides, and these two opening portions are closed by the two semi-columnar portions 73d.

A mount frame 26 is fixed to the housing 73. The mount frame 26 supports the gear box 23 in the nacelle 5. The mount frame 26 includes an annular fixed frame 26a and support frames 26b connecting the fixed frame 26a and the housing 73. The fixed frame 26a is located behind the gear box 23. The support frames 26b extend forward from the fixed frame 26a toward the housing 73 of the gear box 23. Front end portions of the support frames 26b are fixed to corresponding mount support portions 73e projecting outward in the radial direction R from the second tubular portion 73b.

As shown in FIG. 5, the electric motors 22 are lined up behind the gear box 23 at equal intervals in a circumferential direction around the rotation axis X1 of the propeller 11. As shown in FIG. 5, the electric motors 22 are located at equal distances from the rotation axis X1 of the propeller 11. The intervals and distances of the electric motors 22 in the circumferential direction around the rotation axis X1 of the propeller 11 do not have to be equal to each other. As shown in FIG. 6, rotation axes X2 of the electric motors 22 are parallel to the rotation axis X1 of the propeller 11. However, the rotation axes X2 of the electric motors 22 do not have to be parallel to the rotation axis X1 of the propeller 11. When the propulsion system 10A is viewed from a front side in a direction along the rotation axis X1 of the propeller 11, the electric motors 22 overlap the entire gear box 23 or part of the gear box 23. At least part of each electric motor 22 is located inside a radial-direction-R outermost end of the housing 73 in the radial direction R. In the present embodiment, the rotation axes X2 of the electric motors 22 are located inside the radial-direction-R outermost end of the housing 73 in the radial direction R. The radial-direction-R outer end of the housing 73 denotes a portion of the housing 73 which is located farthest from the rotation axis X1 of the propeller 11 when viewed in the direction along the rotation axis X1 of the propeller 11. In the present embodiment, the radial-direction-R outermost end of the housing 73 is part of a side surface of the semi-columnar portion 73d.

As shown in FIG. 5, at least one electric motor 22 among the motors is located in the nacelle 5 such that a gap between the at least one electric motor 22 and the nacelle 5 is set to a predetermined value or more when viewed in the direction along the rotation axis X1 of the propeller 11. The predetermined value is, for example, 50 cm, preferably 40 cm or more. When a predetermined gap is secured between the electric motor 22 and the nacelle 5, the electric motors 22 in the nacelle 5 can be easily repaired or replaced.

For example, in the present embodiment, in a cross section perpendicular to the rotation axis X1 of the propeller 11, the gap between the at least one electric motor 22 and the nacelle 5 may be set to the predetermined value or more. The cross section perpendicular to the rotation axis X1 of the propeller 11 may be a cross section passing through the at least one electric motor 22 or may be a cross section passing through the support frame 26b.

Moreover, as shown in FIG. 5, in the present embodiment, when viewed in the direction along the rotation axis X1 of the propeller 11, an inner peripheral surface of the nacelle 5 coincides with an outer peripheral surface of the fixed frame 26a. A gap between the at least one electric motor 22 and a portion of the nacelle 5 which contacts the mount frame 26 when viewed in the direction along the rotation axis X1 of the propeller 11 may be set to the predetermined value or more.

It is preferable that a distance t1 between the rotation axis X2 of the electric motor 22 and a radial-direction-R outer end of the mount frame 26 be larger than a distance t2 between the rotation axis X1 of the propeller 11 and the rotation axis X2 of the electric motor 22. When the distance t1 is larger than the distance t2, the electric motors 22 in the nacelle 5 can be easily repaired or replaced.

As shown in FIG. 3, the first pump 42 and the oil tank 41 are located outside the housing 73 of the gear box 23. Similarly, the second pump 32 and the oil tank 31 are located outside the housing 73 of the gear box 23. As shown in FIG. 4, when viewed in the direction along the rotation axis X1 of the propeller 11, the first pump 42 and the second pump 32 overlap the gear box 23. Moreover, when viewed in the radial direction R, the first pump 42 and the second pump 32 overlap the gear box 23.

Moreover, as shown in FIG. 6, the first pump 42 and the second pump 32 are located outside the gear box 23 in the radial direction R. The first pump 42, the second pump 32, and the gear box 23 are located so as to intersect with a virtual flat plane perpendicular to the rotation axis X1 of the propeller 11. When viewed in the radial direction R, the first pump 42 overlaps the first tubular portion 73a of the housing 73. Although not shown, when viewed in the radial direction R, the second pump 32 also overlaps the first tubular portion 73a of the housing 73.

At least part of the pitch changer 30 is located behind the gear box 23. At least part of the pitch changer 30 is located on the rotation axis X1 of the propeller 11. At least part of the pitch changer 30 is located inward of the electric motors 22 in the radial direction R. Specifically, as shown in FIG. 6, the control valve 33 and the actuator 34 of the pitch changer 30 are configured as one unit, and this unit is connected to the back surface portion 73c of the housing 73. The control valve 33 and the actuator 34 are located inward of the electric motors 22 in the radial direction R. The control valve 33 and the actuator 34 are located on the rotation axis X1 of the propeller 11.

Part of the actuator 34 may extend into the housing 73 of the gear box. For example, a hydraulic chamber and a piston of the actuator 34 may be located behind a rearmost end of the housing 73, a rod of the actuator 34 may be inserted into an opening of the back surface portion 73c, and part of the rod may extend into the housing 73.

The actuator 34 may be located inward of the rotation axes X2 of the electric motors 22 in the radial direction R. A rearmost end of the actuator 34 may be located in front of rearmost ends of the electric motors 22. A rearmost end of the control valve 33 may be located in front of the rearmost ends of the electric motors 22.

One or both of the control valve 33 and the actuator 34 do not have to be located inward of the electric motors 22 in the radial direction R. Moreover, one or both of the control valve 33 and the actuator 34 do not have to be located on the rotation axis X1 of the propeller 11.

### Details of Gear Box

As shown in FIG. 7, the housing 73 of the gear box 23 accommodates pinion gears 81, a first sun gear 82, a second sun gear 83, a transmission shaft 84, planetary gears 85, a ring gear 86, and a planetary carrier 87.

The number of pinion gears 81 is equal to the number of electric motors 22. Each pinion gear 81 is fixed to the input shaft 71 driven by the electric motor 22. The pinion gears 81 are located at equal distances from the rotation axis X1 of the propeller 11.

The first sun gear 82 is located inward of the pinion gears 81 in the radial direction R orthogonal to the rotation axis X1 of the propeller 11. A center of the first sun gear 82 is located on the rotation axis X1 of the propeller 11. The pinion gears 81 are engaged with the first sun gear 82. The first sun gear 82 has a relatively large diameter so as to be engaged with the pinion gears 81. For example, the diameter of the first sun gear 82 is 50% or more of the diameter of the second tubular portion 73b of the housing 73.

The second sun gear 83 is located in front of the first sun gear 82. A center of the second sun gear 83 is located on the rotation axis X1 of the propeller 11. The transmission shaft 84 extends along the rotation axis X1 of the propeller 11. The transmission shaft 84 includes a first end portion that is a rear end portion and a second end portion that is a front end portion. The first sun gear 82 is fixed to the first end portion, and the second sun gear 83 is fixed to the second end portion. As above, the first sun gear 82 and the second sun gear 83 are connected to each other by the transmission shaft 84. For example, the transmission shaft 84 has a tubular shape that is open in the front-rear direction. Part of the pitch changer 30 may pass through the inside of the transmission shaft 84.

The planetary gears 85 are located outside the second sun gear 83 in the radial direction R orthogonal to the rotation axis X1 of the propeller 11. The planetary gears 85 are engaged with the second sun gear 83.

The ring gear 86 is located outside the planetary gears 85 in the radial direction R orthogonal to the rotation axis X1 of the propeller 11. The ring gear 86 is engaged with the planetary gears 85.

The planetary carrier 87 has a substantially hollow truncated cone shape which decreases in diameter as the planetary carrier 87 extends forward along the rotation axis X1 of the propeller 11. The planetary carrier 87 is connected to the planetary gears 85. The planetary carrier 87 rotates about the rotation axis X1 of the propeller 11 together with the planetary gears 85.

Specifically, each planetary gear 85 includes a bearing 85a supporting a carrier shaft. The carrier shaft supported by the bearing 89a is fixed to a rear end portion of the planetary carrier 87. Therefore, the planetary gears 85 revolve around the second sun gear 83 along the ring gear 86 while being rotated by the rotation of the second sun gear 83. The planetary carrier 87 connected to the planetary gears 85 through the carrier shafts rotates about the rotation axis X1 in accordance with the revolutions of the planetary gears 85 around the rotation axis X1 of the propeller 11.

A front end portion of the planetary carrier 87 is connected to a rear end portion of the output shaft 72 extending in the front-rear direction. The output shaft 72 is supported by a bearing fixed to the housing 73. The output shaft 72 projects forward from the housing 73. The propeller 11 is connected to a front end portion of the output shaft 72.

By the above configuration, in the gear box 23 of the present embodiment, a two-stage speed reduction is performed in a process in which the power is transmitted from the input shafts 71 to the output shaft 72. To be specific, a first-stage speed reduction is performed at the time of the power transmission from the pinion gears 81 to the first sun gear 82, and a second-stage speed reduction is performed at the time of the power transmission from the second sun gear 83 to the planetary carrier 87.

As shown by two-dot chain lines in FIG. 4, the housing 73 accommodates the pump drive gears 91 and 92. The pump drive gears 91 include: at least one first pump drive gear 92 that transmits the power from the gear box 23 to the first pump 42; and at least one second pump drive gear 91 that transmits the power from the gear box 23 to the second pump 32. The first pump drive gear 92 and the second pump drive gear 91 are located outside the first sun gear 82 in the radial direction R and rotate together with the first sun gear 82.

As shown by the two-dot chain lines in FIG. 4, the first pump drive gear 92 is engaged with the first sun gear 82. A center of the first pump drive gear 92 is located on a pump axis of the first pump 42. A pump shaft of the first pump 42 penetrates the housing 73 and is connected to the first pump drive gear 92. Thus, the power is transmitted from the electric motor 22 through the gear box 23 to the first pump 42.

Moreover, one second pump drive gear 91a is engaged with the first sun gear 82, and another second pump drive gear 91b is engaged with the second pump drive gear 91a. A center of the second pump drive gear 91b is located on a pump axis of the second pump 32. A pump shaft of the second pump 32 penetrates the housing 73 and is connected to the second pump drive gear 91b. Thus, the power is transmitted from the electric motor 22 through the gear box 23 to the second pump 32.

The number of first pump drive gears 92 does not have to be one, and the number of second pump drive gears 91 does not have to be two. Moreover, the ratio of the diameters of the first pump drive gear 92 and the second pump drive gear 91 is not especially limited. For example, the numbers of first pump drive gears 92, the numbers of second pump drive gears 91, and the diameters of the first pump drive gears 92 and the second pump drive gears 91 may be determined such that the rotational speed of the first pump 42 becomes higher than the rotational speed of the second pump 32. FIG. 4 shows that the pump shafts of both of the first pump 42 and the second pump 32 are located at equal distances from the rotation axis X1. However, the positions of the first pump 42 and the second pump 32 are suitably changeable.

### Effects

As described above, in the propulsion system 10A according to the present embodiment, both of the first pump 42 serving as the low-pressure pump that supplies the lubricating oil for cooling the gear box 23 and the second pump 32 serving as the high-pressure pump that supplies the operating oil for driving the actuator 34 are driven by the power transmitted from the gear box 23. Therefore, changing the pitch angles of the blades 11b and supplying the lubricating oil to the gear box 23 can be performed without requiring an electric motor for driving a pump and the like as essential components. Therefore, an increase in the weight of the propulsion system 10A for the aircraft 1 can be suppressed.

Moreover, according to the present embodiment, the first pump 42, the second pump 32, and the gear box 23 are located so as to intersect with the virtual flat plane perpendicular to the rotation axis X1 of the propeller 11. As above, since the first pump 42 and the second pump 32 are located around the gear box 23, the propulsion system 10A can be made compact as a whole. Especially, in the present embodiment, since the housing 73 of the gear box 23 has a substantially truncated cone shape, and the first pump 42 and the second pump 32 are located around the first tubular portion 73a, a space around the first tubular portion 73a can be efficiently utilized.

Moreover, according to the present embodiment, since the first pump 42 and the second pump 32 are located outside the gear box 23, the first pump 42 and the second pump 32 can be easily repaired or replaced.

Moreover, according to the present embodiment, the heat exchanger 43 cools the oil by using as the cooling medium the air flowing therein through the air inlet 5a located on the peripheral portion of the propeller 11 of the aircraft 1. As above, since the air is taken in through the peripheral portion of the propeller 11, the gas used as the cooling medium can be easily taken in. The air inlet 5a may be located on the outer wall of the nacelle 5 or the peripheral portion of the propeller 11.

Moreover, according to the present embodiment, the first sun gear 82 is engaged with the pinion gears 81 and has a relatively large diameter. Therefore, the pump drive gear 91 can be easily located so as to be engaged with the first sun gear 82, and the power for driving the pump can be easily taken out from the first sun gear 82.

### Embodiment 2

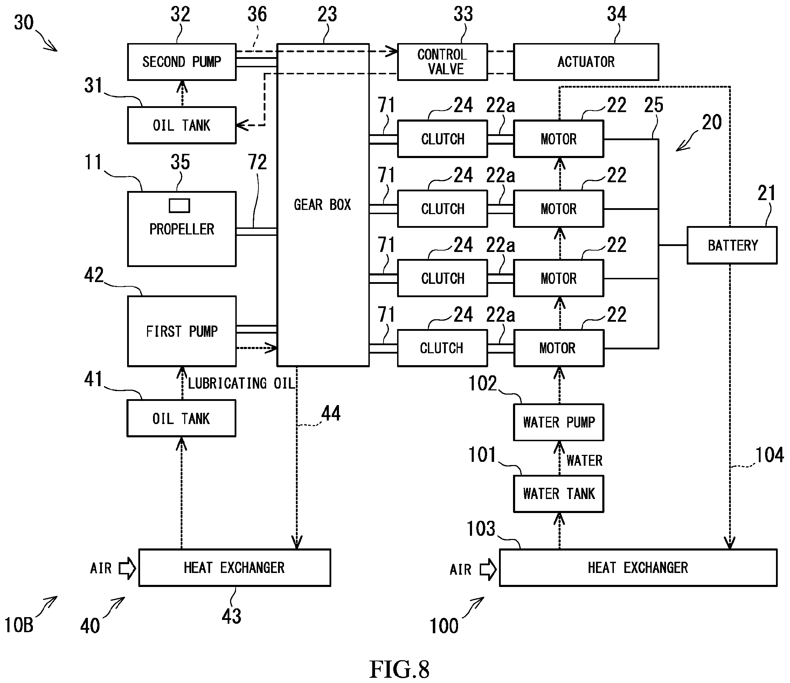

FIG. 8 is a block diagram showing a propulsion system 10B for the aircraft according to Embodiment 2. The propulsion system 10B includes a cooler 100 instead of the coolers 50 and 60 of Embodiment 1. The cooler 100 serves as both of the coolers 50 and 60 of Embodiment 1. In the present embodiment and Embodiments 3, 4, and 5 described below, the same reference signs are used for the same or similar components as Embodiment 1, and a repetition of the same explanation is avoided.

The cooler 100 cools the battery 21 and the electric motors 22. The cooler 100 includes a water tank 101, a water pump 102, a heat exchanger 103, and a circulation passage 104. The water tank 101 stores water used as the cooling water. The water pump 102 supplies the water, stored in the water tank 101, to the battery 21 and the electric motors 22. For example, the water pump 102 may be of an electric type or a mechanical type.

The heat exchanger 103 cools the water flowing through the circulation passage 104. The heat exchanger 103 is, for example, of an air-cooled type. The air inlet 5a is located on the nacelle 5 of the aircraft 1. The heat exchanger 103 cools the water, which has flowed into the heat exchanger 103, by using as the cooling medium the air flowing therein through the air inlet 5a.

The water tank 101, the water pump 102, the heat exchanger 103, the battery 21, and the electric motors 22 are located at the circulation passage 104. The cooling water circulates between the battery 21, the electric motors 22, and the heat exchanger 103 through the circulation passage 104. To be specific, when the water pump 102 drives, the water stored in the water tank 101 is supplied to the battery 21 and the electric motors 22. The cooling water is heated by passing through the battery 21 and the electric motors 22. After passing through the battery 21 and the electric motors 22, the cooling water is sent to the heat exchanger 103 to be cooled, and then returns to the water tank 101.

In FIG. 8, the circulation passage 104 includes passages which are connected in series and through which the water is supplied to the electric motors 22 in order. However, the circulation passage 104 is not limited to this. For example, the circulation passage 104 may include branch passages which extend from a water passage extending from the water pump 102, are connected to the respective electric motors 22, and are located in parallel. Moreover, in FIG. 8, the circulation passage 104 guides the cooling water, discharged from the water pump 102, to the electric motors 22 and guides the cooling water, having passed through the electric motors 22, to the battery 21. However, the circulation passage 104 may guide the cooling water, discharged from the water pump 102, to the battery 21 and guide the cooling water, having passed through the battery 21, to the electric motors 22. Moreover, in FIG. 8, the circulation passage 104 includes passages which are connected in series and through which the water is supplied to the battery 21 and the electric motors 22. However, the circulation passage 104 is not limited to this. For example, the circulation passage 104 may include branch passages that extend from a water passage extending from the water pump 102, are connected to the battery 21 and the electric motors 22, and are located in parallel.

The present embodiment can obtain the same effects as Embodiment 1. Moreover, in the present embodiment, the number of heat exchangers required to cool the battery 21 and the electric motors 22 is one. Therefore, the propulsion system can be made compact as a whole.

### Embodiment 3

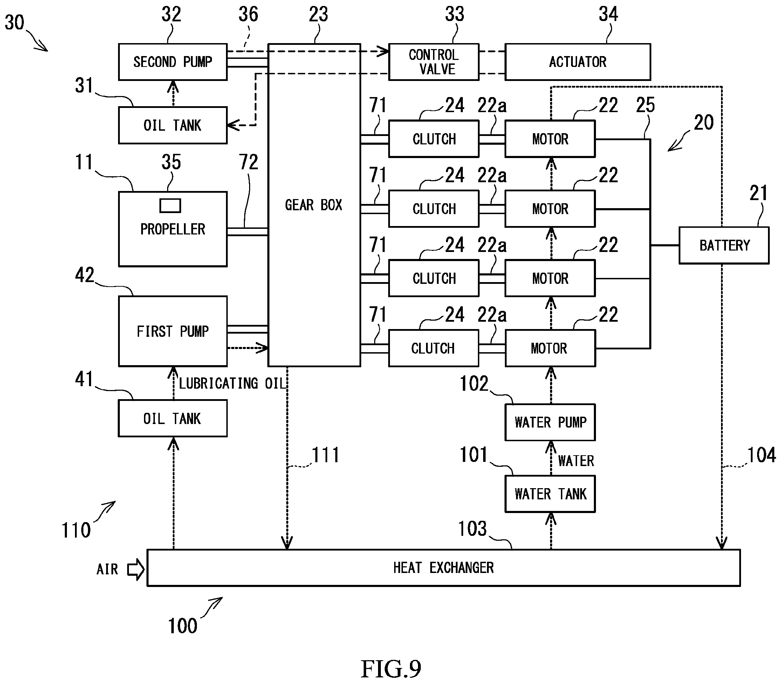

FIG. 9 is a block diagram showing a propulsion system 10C for the aircraft according to Embodiment 3. In the propulsion system 10C, the cooler 100 of Embodiment 2 cools the lubricating oil flowing through the circulation passage 44. To be specific, in the present embodiment, the heat exchanger 103 of the cooler 100 also serves as a heat exchanger of the lubricator 40.

A lubricator 110 supplies the lubricating oil to the gears included in the gear box 23. The lubricator 110 includes the oil tank 41, the first pump 42, the heat exchanger 103, and a circulation passage 111. The oil tank 41, the first pump 42, the heat exchanger 103, and the gear box 23 are located at the circulation passage 111. The circulation passage 111 is one example of a first circulation passage. The water tank 101, the water pump 102, the motors 22, and the battery 21 are located at the circulation passage 104. The circulation passage 104 is one example of a second circulation passage, and the water pump 102 is one example of a third pump.

The oil circulates between the gear box 23 and the heat exchanger 103 through the circulation passage 111. To be specific, when the first pump 42 drives, the lubricating oil stored in the oil tank 41 is supplied to the gear box 23. The lubricating oil is heated by passing through the gear box 23. After flowing out of the gear box 23, the lubricating oil is sent to the heat exchanger 103 to be cooled, and then returns to the oil tank 41.

As above, the heat exchanger 103 is located such that the circulation passage 111 and the circulation passage 104 pass therethrough. Moreover, by the air flowing therein through the air inlet 5a, the heat exchanger 103 cools the oil flowing through the circulation passage 111 and the water flowing through the circulation passage 104.

The present embodiment can obtain the same effects as Embodiment 1. Moreover, in the present embodiment, cooling the liquid heated by the electric motors 22 and the battery 21 and cooling the oil supplied to the gear box 23 can be performed by the same heat exchanger 103. Therefore, the propulsion system can be made compact as a whole.

### Embodiment 4

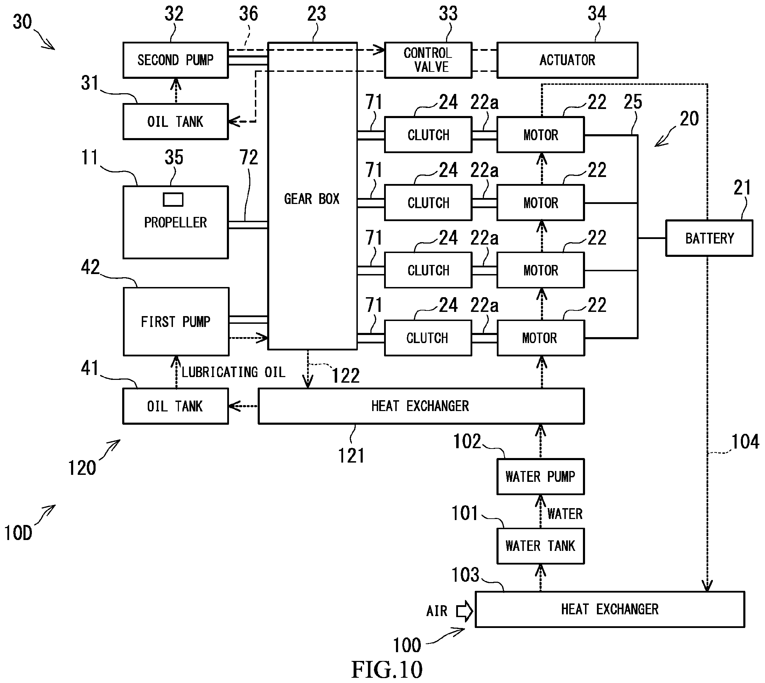

FIG. 10 is a block diagram showing a propulsion system 10D for the aircraft according to Embodiment 4. In the propulsion system 10D, the lubricating oil for the gear box 23 is cooled by the water cooled by the heat exchanger 103 of the cooler 100.

A lubricator 120 supplies the lubricating oil to the gears included in the gear box 23. The lubricator 120 includes the oil tank 41, the first pump 42, a heat exchanger 121, and a circulation passage 122. The oil tank 41, the first pump 42, the heat exchanger 121, and the gear box 23 are located at the circulation passage 122.

The heat exchanger 121 is, for example, of a water-cooled type. The heat exchanger 121 is located such that the circulation passage 122 and the circulation passage 104 pass therethrough. The heat exchanger 121 cools the oil, flowing through the circulation passage 122, by the water flowing through the circulation passage 104. The circulation passage 111 is one example of the first circulation passage. The heat exchanger 121 is one example of a first heat exchanger. The water pump 102 is one example of the third pump. The circulation passage 104 is one example of the second circulation passage. The heat exchanger 103 is one example of a second heat exchanger.

The present embodiment can obtain the same effects as Embodiment 1. Moreover, in the present embodiment, the liquid that cools the electric motors 22 and the battery 21 is utilized to cool the oil to be supplied to the gear box 23. Therefore, even when it is difficult to locate the heat exchanger 121 at such a position that the heat exchanger 121 can be cooled by air, the heat exchanger 121 can be cooled by utilizing the liquid that cools the electric motors 22 and the battery 21. Therefore, the degree of freedom of the arrangement of the heat exchanger 121 improves.

### Embodiment 5

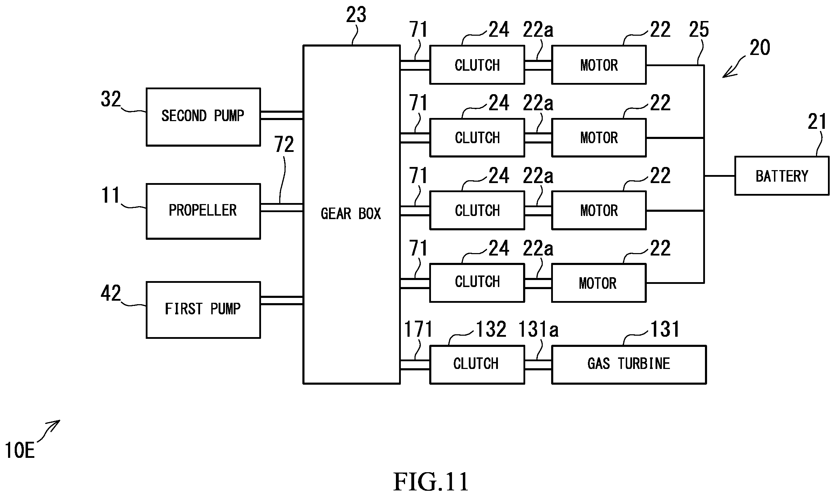

FIG. 11 is a block diagram showing a propulsion system 10E for the aircraft according to Embodiment 5. As a driving source that drives the propeller 11, the propulsion system 10E includes a gas turbine 131 in addition to the electric motors 22. In FIG. 11, a cooler that cools the battery 21 and the electric motors 22 and a lubricator that supplies the lubricating oil to the gears included in the gear box 23 are omitted.

The propulsion system 10E includes the electric motors 22 and the gas turbine 131. A clutch 132 is located between the gear box 23 and the gas turbine 131. The gear box 23 includes an input shaft 171. A pinion gear that is engaged with the first sun gear 82 is fixed to the input shaft 171 of the gear box 23 as with the input shaft 71. The input shaft 171 is connected to the clutch 132. The clutch 132 is, for example, a one-way clutch. The clutch 132 allows the transmission of torque from an output shaft 131a of the gas turbine 131 to the input shaft 171 of the gear box 23 and inhibits the transmission of torque from the input shaft 171 of the gear box 23 to the output shaft 131a of the gas turbine 131. The clutch 24 is one example of a first clutch, and the clutch 132 is one example of a second clutch.

The present embodiment can obtain the same effects as Embodiment 1. Moreover, in the present embodiment, the power can be transmitted to the propeller 11 from not only the electric motors 22 but also the gas turbine 131.

### Other Embodiments

The foregoing has described the embodiments, but modifications, eliminations, and additions can be made with respect to the above configurations within the scope of the present disclosure.

Each of the configurations of the propulsion systems described in Embodiments 1 to 5 is one example and not limited. For example, Embodiments 1, 2, 3, 4, and 5 can be suitably combined with each other. The positions, structures, shapes, numbers, and the like of the components included in the propulsion systems are not limited to those in the above embodiments.

For example, Embodiments 1 to 5 describe the aircraft including four propellers. However, the aircraft is not limited to this. For example, the aircraft may be a single-engine aircraft including one propeller located at a front end portion of an airframe, a twin-engine aircraft including two propellers located at left and right main wings, or a three-engine aircraft including three propellers located at a front end portion and left and right main wings of an airframe.

In Embodiments 1 to 5, the propulsion system is located in the nacelle 5 attached to the lower portion of the main wing 3. However, the propulsion system may be located at a different portion of the aircraft. In this case, the aircraft does not have to include the nacelle. For example, the propulsion system may be located in the airframe of the aircraft or may be located in the main wing.

For example, the number of electric motors included in the propulsion system does not have to be four and may be two, three, or five or more.

In Embodiments 1 to 5, the electric motors 22 are lined up behind the gear box 23 at equal intervals in the circumferential direction around the rotation axis X1 of the propeller 11. However, the arrangement of the electric motors 22 is not limited to this. The configuration of the gear box may change in accordance with the arrangement of the electric motors 22.

For example, the electric motors included in the propulsion system may include electric motors lined up in a direction parallel to the rotation axis of the propeller. Thus, the frontal projected area of the entire system can be further reduced. For example, the propulsion system may include: two electric motors that are located on a right side of the rotation axis of the propeller and lined up in the front-rear direction with a gap; and another two electric motors that are located on a left side of the rotation axis of the propeller and line up in the front-rear direction with a gap. In this case, the electric motor at the front side may be located in front of the input shaft of the gear box, and the electric motor at the rear side may be located behind the input shaft of the gear box.

Moreover, for example, the electric motors included in the propulsion system may include electric motors lined up in a direction perpendicular to the rotation axis of the propeller. Thus, the size of the propulsion system in a direction perpendicular to the rotation axis of the propeller (i.e., in a direction perpendicular to a direction in which the electric motors are lined up) can be reduced. For example, when the electric motors are lined up in a horizontal direction orthogonal to the rotation axis of the propeller, the dimension of the propulsion system in an upper-lower direction can be reduced, and therefore, the propulsion system is easily stored in the main wing of the aircraft.

In Embodiments 1 to 5, the rotation axes X2 of all the electric motors 22 included in propulsion system are located inside the radial-direction-R outer end of the housing 73 in the radial direction R orthogonal to the rotation axis of the propeller. However, Embodiments 1 to 5 are not limited to this. For example, the rotation axes X2 of some of the electric motors 22 included in the propulsion system may be located inside the radial-direction-R outer end of the housing 73 in the radial direction R.

In Embodiments 1 to 5, the first pump 42, the second pump 32, and the gear box 23 are located so as to intersect with the virtual flat plane perpendicular to the rotation axis X1 of the propeller 11. However, the configuration of the propulsion system is not limited to this. The virtual flat plane that is perpendicular to the rotation axis X1 of the propeller 11 and passes through the gear box 23 does not have to intersect with one or both of the first pump 42 and the second pump 32.

In Embodiments 1 to 5, the first pump 42 and the second pump 32 are located outside the gear box 23. However, one or both of the first pump 42 and the second pump 32 may be located inside the gear box 23. Moreover, the propulsion system may include an oil reservoir that stores oil in the gear box instead of one or both of the oil tanks 31 and 41.

Moreover, the oil tanks 31 and 41 may be one common tank. To be specific, an oil tank that stores oil used as both of the lubricating oil in the gear box 23 and the operating oil in the actuator 34 may be located at both of the circulation passage 36 and the circulation passage 44.

The actuator 34 does not have to be the hydraulic actuator. For example, the actuator 34 may be a different type of actuator, such as an electric motor. In this case, the propulsion system does not have to include the second pump 32, the control valve 33, and the like.

In Embodiments 1 to 5, the first pump 42 and the second pump 32 receives the power from the first sun gear 82 of the gear box 23. However, a method of taking out the power for the pump from the gear box is not limited to this. For example, the power for the pump may be taken out from a gear separately attached to the transmission shaft 84 or may be taken out from a gear separately attached to the planetary carrier 87 or the output shaft 72. The configuration of the gear box 23 is not limited to those described in Embodiments 1 to 5. In Embodiments 1 to 5, the gear box performs the two-stage speed reduction. However, the gear box may perform a speed reduction of a single stage or a speed reduction of three or more stages. The first pump 42 and the second pump 32 may receive the power from a different mechanism other than the gear box 23. One or both of the first pump 42 and the second pump 32 may be of an electric type.

As with the first pump 42 and the second pump 32, at least one or all of the water pumps described in Embodiments 1 to 5 may be driven by the power transmitted from the gear box 23. In Embodiments 1 to 5, the cooler uses water as a liquid cooling medium. However, the cooling medium is not limited to this and may be a different liquid, such as ethylene glycol. The clutch does not have to be located between the gear box and the electric motor.

The functionality of the elements disclosed herein may be implemented using circuitry or processing circuitry which includes general purpose processors, special purpose processors, integrated circuits, ASICs ("Application Specific Integrated Circuits"), conventional circuitry or any combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware or processor.

### Disclosed Aspects

The following aspects disclose preferred embodiments.

### First Aspect

A propulsion system for an aircraft,
the propulsion system including:
electric motors;
a propeller including blades whose pitch angles are changeable;
a gear box that reduces speeds of rotations of the electric motors and transmits the rotations to the propeller;
an actuator that changes the pitch angles of the blades;
a pump that is driven by power transmitted from the gear box and supplies oil to the gear box;
a heat exchanger that cools the oil by using at least one of a gas or a liquid as a cooling medium; and
a circulation passage through which the oil circulates between the gear box and the heat exchanger.

According to the above configuration, the pump that supplies the oil as the lubricating oil to the gear box is driven by the power transmitted from the gear box. Therefore, the lubricating oil can be supplied to the gear box without requiring an electric motor for driving a pump and the like as essential components. Therefore, the increase in the weight of the propulsion system for the aircraft can be suppressed.

### Second Aspect

The propulsion system according to the first aspect, wherein:
the pump includes a first pump; and
the propulsion system further includes a second pump that is different from the first pump, is driven by the power transmitted from the gear box, and supplies to the actuator the oil having pressure different from pressure of the oil supplied to the gear box by the first pump.

According to the above configuration, both of the first pump serving as a pump that supplies the oil as the lubricating oil to the gear box and the second pump serving as a pump that supplies the oil for driving the actuator are driven by the power transmitted from the gear box. Therefore, supplying the lubricating oil to the gear box and changing the pitch angles of the blades can be performed without requiring an electric motor for driving a pump and the like as essential components. Thus, the increase in the weight of the propulsion system for the aircraft can be suppressed.

### Third Aspect

The propulsion system according to the second aspect, wherein the first pump, the second pump, and the gear box are located so as to intersect with a virtual flat plane perpendicular to a rotation axis of the propeller.

According to the above configuration, since the first pump and the second pump are located around the gear box, the propulsion system can be made compact as a whole.

### Fourth Aspect

The propulsion system according to the second or third aspect, wherein:
the gear box includes gears and a housing accommodating the gears; and
the first pump and the second pump are located outside the housing.

According to the above configuration, since the first pump and the second pump are located outside the housing of the gear box, the maintenance of the first pump and the second pump can be easily performed.

### Fifth Aspect

The propulsion system according to any one of the first to fourth aspects, wherein:
the aircraft includes an air inlet;
the heat exchanger includes a heat exchanger that cools the oil by using, as the cooling medium, air flowing therein through the air inlet; and
the air inlet is located on a peripheral portion of the propeller of the aircraft.

According to the above configuration, since the air is taken in through the peripheral portion of the propeller, the gas used as the cooling medium can be easily taken in.

### Sixth Aspect

The propulsion system according to any one of the first to fifth aspects, wherein:
the heat exchanger includes a first heat exchanger;
the circulation passage includes a first circulation passage;
the propulsion system further includes
   a battery that supplies electric power to the electric motors,
   a third pump that supplies a liquid for cooling the electric motors or the battery,
   a second heat exchanger that cools the liquid, and
   a second circulation passage through which the liquid circulates between the electric motors and the second heat exchanger or between the battery and the second heat exchanger; and
the first heat exchanger includes a heat exchanger that cools the oil, flowing through the first circulation passage, by the liquid flowing through the second circulation passage.

According to the above configuration, the liquid that cools the electric motors or the battery is utilized to cool the oil to be supplied to the gear box. Therefore, the liquid that cools the electric motors or the battery can be effectively utilized.

### Seventh Aspect

The propulsion system according to the fifth aspect, wherein:
the circulation passage includes a first circulation passage;
the propulsion system further includes
   a battery that supplies electric power to the electric motors,
   a third pump that supplies a liquid for cooling the electric motors or the battery, and
   a second circulation passage through which the liquid circulates between the electric motors and the heat exchanger or between the battery and the heat exchanger; and
the heat exchanger cools the oil flowing through the first circulation passage and the liquid flowing through the second circulation passage, by the air flowing therein through the air inlet.

According to the above configuration, since cooling the liquid heated by the electric motors or the battery and cooling the oil to be supplied to the gear box can be performed by the same heat exchanger, the propulsion system can be made compact as a whole.

### Eighth Aspect

The propulsion system according to any one of the second to fourth aspects, wherein
the gear box includes:
pinion gears fixed to respective input shafts driven by the corresponding electric motors;
a sun gear engaged with the pinion gears;
a transmission shaft fixed to the sun gear and located in a power transmitting path extending between the electric motors and the propeller; and
a pump drive gear engaged with the sun gear and connected to the first pump or the second pump.

According to the above configuration, the sun gear is engaged with the pinion gears and has a relatively large diameter. Therefore, the pump drive gear is easily located so as to be engaged with the sun gear, and the power for driving the pump can be easily taken out from the sun gear.

### Ninth Aspect

The propulsion system according to any one of the first to eighth aspects, further including clutches that are connected to the respective electric motors and located between the gear box and the corresponding electric motors.

According to the above configuration, when any of the electric motors malfunctions, the influence on the propulsion system can be suppressed.

### Tenth Aspect

The propulsion system according to the ninth aspect, wherein:
the clutches include first clutches; and
the propulsion system further includes
   a gas turbine engine and
   a second clutch located between the gear box and the gas turbine engine.

According to the above configuration, the power can be transmitted to the propeller from not only the electric motors but also the gas turbine.

### Reference Signs List

1 aircraft
5 nacelle
5a air inlet
10A, 10B, 10C, 10D, 10E propulsion system
11 propeller
11b blade
21 battery
22 electric motor
23 gear box
24 clutch
31 oil tank
32 second pump
33 control valve
34 actuator
41 oil tank
42 first pump
43, 53, 63, 103, 121 heat exchanger
51, 61, 101 water tank
52, 62, 102 water pump
44, 54, 64, 104, 111, 122 circulation passage
73 housing
81 pinion gear
82 first sun gear
83 second sun gear
84 transmission shaft
85 planetary gear
86 ring gear
87 planetary carrier
91, 92 pump drive gear
131 gas turbine
132 clutch

## Claims

1. A propulsion system for an aircraft,
the propulsion system comprising:
electric motors;
a propeller including blades whose pitch angles are changeable;
a gear box that reduces speeds of rotations of the electric motors and transmits the rotations to the propeller;
an actuator that changes the pitch angles of the blades;
a pump that is driven by power transmitted from the gear box and supplies oil to the gear box;
a heat exchanger that cools the oil by using at least one of a gas or a liquid as a cooling medium; and
a circulation passage through which the oil circulates between the gear box and the heat exchanger.

2. The propulsion system according to claim 1, wherein:
the pump includes a first pump; and
the propulsion system further comprises a second pump that is different from the first pump, is driven by the power transmitted from the gear box, and supplies to the actuator the oil having pressure different from pressure of the oil supplied to the gear box by the first pump.

3. The propulsion system according to claim 2, wherein the first pump, the second pump, and the gear box are located so as to intersect with a virtual flat plane perpendicular to a rotation axis of the propeller.

4. The propulsion system according to claim 2 or 3, wherein:
the gear box includes gears and a housing accommodating the gears; and
the first pump and the second pump are located outside the housing.

5. The propulsion system according to claim 1 or 2, wherein:
the aircraft includes an air inlet;
the heat exchanger includes a heat exchanger that cools the oil by using, as the cooling medium, air flowing therein through the air inlet; and
the air inlet is located on a peripheral portion of the propeller of the aircraft.

6. The propulsion system according to claim 1 or 2, wherein:
the heat exchanger includes a first heat exchanger;
the circulation passage includes a first circulation passage;
the propulsion system further comprises
a battery that supplies electric power to the electric motors,
a third pump that supplies a liquid for cooling the electric motors or the battery,
a second heat exchanger that cools the liquid, and
a second circulation passage through which the liquid circulates between the electric motors and the second heat exchanger or between the battery and the second heat exchanger; and
the first heat exchanger includes a heat exchanger that cools the oil, flowing through the first circulation passage, by the liquid flowing through the second circulation passage.

7. The propulsion system according to claim 5, wherein:
the circulation passage includes a first circulation passage;
the propulsion system further comprises
a battery that supplies electric power to the electric motors,
a third pump that supplies a liquid for cooling the electric motors or the battery, and
a second circulation passage through which the liquid circulates between the electric motors and the heat exchanger or between the battery and the heat exchanger; and
the heat exchanger cools the oil flowing through the first circulation passage and the liquid flowing through the second circulation passage, by the air flowing therein through the air inlet.

8. The propulsion system according to claim 2 or 3, wherein
the gear box includes:
pinion gears fixed to respective input shafts driven by the corresponding electric motors;
a sun gear engaged with the pinion gears;
a transmission shaft fixed to the sun gear and located in a power transmitting path extending between the electric motors and the propeller; and
a pump drive gear engaged with the sun gear and connected to the first pump or the second pump.

9. The propulsion system according to claim 1 or 2, further comprising clutches that are connected to the respective electric motors and located between the gear box and the corresponding electric motors.

10. The propulsion system according to claim 9, wherein:
the clutches include first clutches; and
the propulsion system further comprises
a gas turbine engine and
a second clutch located between the gear box and the gas turbine engine.
